(19) Europäisches Patentamt / European Patent Office / Office européen des brevets

(11) **EP 2 987 580 B1**

(12) **EUROPEAN PATENT SPECIFICATION**

(45) Date of publication and mention
of the grant of the patent:
**21.02.2018 Bulletin 2018/08**

(21) Application number: **14785616.5**

(22) Date of filing: **24.03.2014**

(51) Int Cl.:
**B23K 9/08** (2006.01)　　**B23K 9/02** (2006.01)
**B23K 9/173** (2006.01)　　**B23K 9/23** (2006.01)
**B23K 35/30** (2006.01)　　**B23K 35/368** (2006.01)
**B23K 9/16** (2006.01)　　**B23K 35/32** (2006.01)
**B23K 35/40** (2006.01)　　**B23K 37/00** (2006.01)
**B23K 35/02** (2006.01)　　**B23K 35/38** (2006.01)
**B23K 35/24** (2006.01)

(86) International application number:
**PCT/JP2014/058083**

(87) International publication number:
**WO 2014/171269 (23.10.2014 Gazette 2014/43)**

(54) **METHOD FOR MANUFACTURING WELDED ARTICLE**

VERFAHREN ZUR HERSTELLUNG EINES GESCHWEISSTEN GEGENSTANDS

PROCÉDÉ POUR FABRIQUER UN ARTICLE SOUDÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **16.04.2013 JP 2013086020**

(43) Date of publication of application:
**24.02.2016 Bulletin 2016/08**

(73) Proprietor: **Kabushiki Kaisha Kobe Seiko Sho
(Kobe Steel, Ltd.)
Kobe-shi, Hyogo 651-8585 (JP)**

(72) Inventors:
• **YAMAZAKI, Kei**
  **Fujisawa-shi, Kanagawa 251-8551 (JP)**
• **YUAN, Yimin**
  **Fujisawa-shi, Kanagawa 251-8551 (JP)**
• **SUZUKI, Reiichi**
  **Fujisawa-shi, Kanagawa 251-8551 (JP)**

(74) Representative: **Müller-Boré & Partner
Patentanwälte PartG mbB
Friedenheimer Brücke 21
80639 München (DE)**

(56) References cited:
**CN-A- 101 143 401　　DE-A1-102005 033 744
GB-A- 2 039 462　　JP-A- S6 448 678
JP-A- H11 291 032　　JP-A- S62 248 569
JP-A- 2012 218 065　　US-A- 2 743 342**

## Description

The present invention relates to a method of fabricating a weldment.

Welding operation using a flux-cored wire is one of keys in a manufacturing process in a field of manufacturing ships and bridges. In such a field, gas shielded arc welding (mainly $CO_2$ gas shielded arc welding) is used (see PTL 1), in which a shield gas mainly containing carbon dioxide gas is supplied from a welding torch, a flux-cored wire is fed into the welding torch while a welding current is supplied to the flux-cored wire, and arc is generated in the shield gas between the flux-cored wire and a base plate to perform welding.

As is well known, in a field of manufacturing automobiles, gas shielded arc welding (mainly mixed-gas shielded arc welding) is also used, in which a shield gas mainly containing inert gas such as argon gas is supplied from a welding torch, a solid wire including no flux is fed into the welding torch while a welding current is supplied to the solid wire, and arc is generated between the solid wire and a base plate in the shield gas to perform welding. To decrease pores formed during welding of a galvanized steel sheet for use in automobile components, PTL 2 describes that arc welding is performed while the molten pool is stirred by applying a rectangular-wave AC magnetic field, having a magnetic flux density 3 to 8 MT, a duty ratio 30 to 70%, and a frequency 5 to 30 Hz, perpendicularly to a surface of a molten pool from a magnetic coil attached to a tip of a welding torch.

Further, CN 101 143 401 A discloses a welding method and a welding apparatus for stirring a molten pool with electromagnetic force for the object of obtaining a good weld metal in a narrow gap.

JP 2012 218065 A discloses a flux-cored wire for achieving good bead and slag removal in tandem welding consisting of two electrodes.

PTL 1: Japanese Unexamined Patent Application Publication No. 2006-95550.
PTL 2: Japanese Unexamined Patent Application Publication No. 2007-98459.

In the field of manufacturing ships and bridges, a primer-coated steel plate is often used as a base plate to be welded. At least the front and the back of the primer-coated steel plate is subjected to surface treatment using a shop primer (primer), i.e., primary rust preventive paint, in order to suppress rust occurrence during a machining step such as cutting and welding and an assembly step.

However, in a fillet weld joint that accounts for the most of weld joints in such a field, a primer applied on a surface of a steel plate is evaporated during welding and enters the molten pool, so that pores such as pits and blowholes are easily formed in the surface and the inside of a weld metal (weld bead). The term "pit" refers to a pore opened in a weld bead surface, and the term "blowhole" refers to a pore confirmed in the inside of the weld metal. If a pit is formed in the surface of the weld bead, the weld bead must be repaired, resulting in an increase in the number of steps.

Abase plate to be welded and thickness thereof, a shield gas to be used, a type of a welding wire to be used, a welding condition, and the like are each different between the field of manufacturing ships and bridges and the field of manufacturing automobiles. Hence, the above-described problem cannot be solved only by applying an AC magnetic field in the carbon dioxide gas shielded arc welding used in the field of manufacturing ships and bridges.

To specifically describe, for example, in the field of manufacturing automobiles, since lap fillet welding of a thin plate (about 3.2 mm or less in thickness) is performed, a molten pool has a small size, and can be easily rotated by a small magnetic flux density (3 to 8 MT) as described in PTL 2. In addition, as described above, the mixed-gas shielded arc welding, which uses a solid wire and a mixed gas mainly containing inert gas such as argon gas, is performed in such a field. Hence, an extremely small amount of slug is formed on the molten pool, and constraint of the molten pool due to slug as described later is not necessary to be considered.

On the other hand, for example, in the field of shipbuilding and bridges, a medium or thick plate having a thickness of 6 mm or more is often used, and a molten pool in fillet welding is likely to have a large size. It is therefore necessary to exert the optimum Lorentz force on a molten pool depending on size of the molten pool in order to rotationally stir the molten pool as a whole in welding with a primer steel plate as a base plate. If the Lorentz force does not satisfy the optimum condition, the rotational flow of the molten pool is merely disturbed. Thus, occurrence of pores cannot be suppressed by directly using the technique described in PTL 2.

In the field of shipbuilding and bridges, an extremely beautiful bead shape is required in horizontal fillet welding of a T joint; hence, $CO_2$ gas shielded arc welding with a flux-cored wire is used to fix the bead shape thanks to bearing of a molten pool by slug. However, the welding with the flux-cored wire is different from the welding with a solid wire in that the surface of the molten pool is covered with the high-viscosity slug. Hence, simple application of a magnetic field may not result in sufficient stirring of molten metal because the molten metal is constrained by slug, and thus the pore suppression effect may not have been provided.

An object of the invention is to suppress occurrence of poor appearance of a weld due to pores originating in a primer in the gas shielded arc welding using active gas and a flux-cored wire and using a primer-coated steel plate as a base plate.

According to the present invention, there is provided a method of fabricating a weldment through welding of corners between a lower plate and a vertical plate, the lower plate being composed of a primer-coated steel plate, the vertical plate being composed of a steel plate and placed vertically on the lower plate, in which a molten pool is formed in each of the corners by supplying a welding current from a flux-cored wire to the corner via arc with the shield gas, the flux-cored wire including a steel sheath having a flux-filled inside, the shield gas mainly containing carbon dioxide gas, and an alternating magnetic field is applied to the molten pool, the welding current (A) and the magnetic flux density (mT) of the alternating magnetic field having a relationship

$$20000 \leq \text{welding current} \times \text{magnetic flux density} \leq 30000.$$

In the method of fabricating the weldment, the alternating magnetic field has a fundamental frequency of 2 to 5 Hz. The composition of the flux-cored wire has, relative to the total mass of the wire, a total Ti equivalent of metal Ti, Ti oxide, and Ti compounds: 1.5 to 3.5 mass%, a total Si equivalent of metal Si, Si oxide, and Si compounds: 0.6 to 2.0 mass%, a total Al equivalent of metal Al, Al oxide, and Al compounds: 0.2 to 1.0 mass%, a total Zr equivalent of metal Zr, Zr oxide, and Zr compounds: 0.6 to 1.0 mass%, and a total Mg equivalent of metal Mg, Mg oxide, and Mg compounds: 0.2 to 0.8 mass%, and the remainder consisting of Fe and inevitable impurities.

According to the invention, it is possible to suppress occurrence of poor appearance of a weld due to pores originating in a primer in the gas shielded arc welding using active gas and a flux-cored wire and using a primer-coated steel plate as a base plate.

Fig. 1 illustrates a schematic configuration of a welding apparatus.

Fig. 2 is a sectional view for explaining a configuration of a welding torch provided in the welding apparatus.

Fig. 3 is a block diagram illustrating a configuration of a control section provided in the welding apparatus.

Fig. 4 is a diagram for explaining an exemplary configuration of a work (weldment) fabricated using the welding apparatus.

Fig. 5 is a schematic view illustrating a relationship between the welding torch as well as a flux-cored wire and a molten pool formed in the work in a manufacturing method (welding method) of the embodiment.

Fig. 6 is a graph with a horizontal axis as a product of welding current and magnetic flux density and a vertical axis as the number of blowholes of 3 mm or more in length in a bead.

Fig. 7a is a diagram for explaining pores formed in a first weld (bead) in a work.

Fig. 7b is a diagram for explaining pores formed in the first weld (bead) in a work.

Fig. 7c is a diagram for explaining pores formed in the first weld (bead) in a work.

Fig. 8 is a graph with a horizontal axis as a frequency of a coil current and a vertical axis as the number of blowholes of 3 mm or more in length in a bead.

Fig. 9 illustrates a fracture of the first weld for the frequency of the coil current of 0.5 Hz.

Fig. 10a is a diagram for explaining a fracture of one of beads provided in examples and comparative examples.

Fig. 10b is a diagram for explaining a fracture of one of beads provided in the examples and the comparative examples.

Fig. 10c is a diagram for explaining a fracture of one of beads provided in the examples and the comparative examples.

Fig. 10d is a diagram for explaining a fracture of one of beads provided in the examples and the comparative examples.

Fig. 10e is a diagram for explaining a fracture of one of beads provided in the examples and the comparative examples.

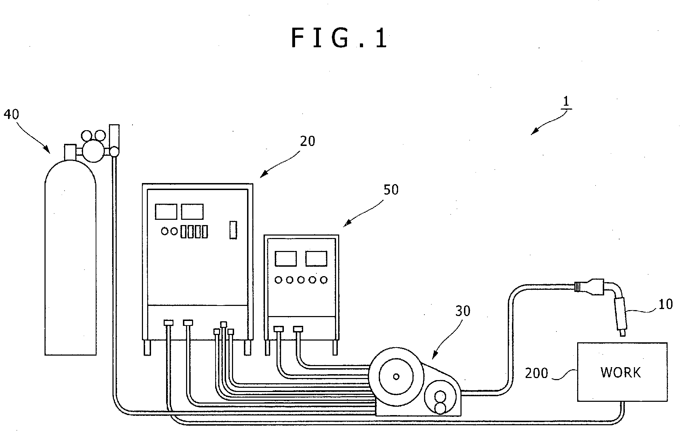

Hereinafter, one embodiment of the invention will be described in detail with reference to the accompanying drawings. Fig. 1 illustrates a schematic configuration of a welding apparatus 1. The welding apparatus 1 welds a work 200 by a carbon dioxide gas shielded arc welding technique using carbon dioxide gas as a shield gas among gas shielded arc welding techniques of a consumable electrode type.

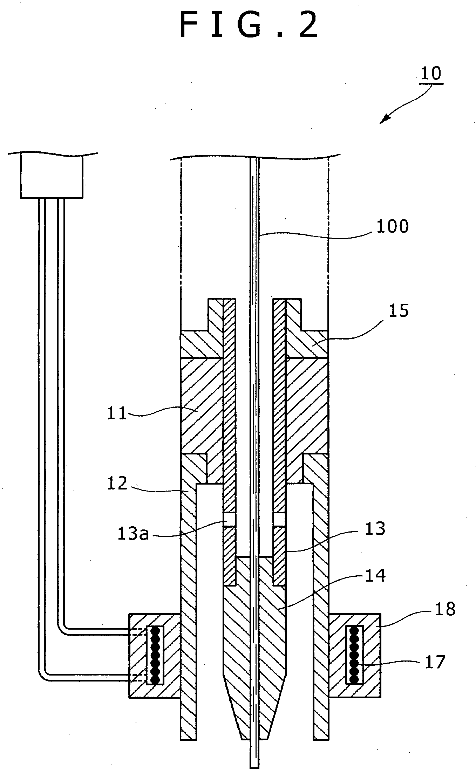

The welding apparatus 1 illustrated in Fig. 1 includes a welding torch 10 for welding the work 200 using a flux-cored wire 100 (see Fig. 2 described later), a welding source 20 that supplies a welding current to the welding torch 10, a wire feeder 30 that sequentially feeds the flux-cored wire 100 to the welding torch 10, a shield gas supply device 40 that supplies carbon dioxide gas as a shield gas to the welding torch 10, and a magnetic-field application source 50 that supplies a coil current (described in detail later) for generation of an AC magnetic field to the welding torch 10.

In this embodiment, a combination of the shield gas supply device 40 and the welding torch 10 functions as a shield gas supply unit, a combination of the welding source 20 and the welding torch 10 functions as a welding current supply unit, and a combination of the magnetic-field application source 50 and the welding torch 10 functions as an alternating-magnetic-field application unit.

Fig. 2 is a sectional view for explaining a configuration of the welding torch 10 provided in the welding apparatus 1 illustrated in Fig. 1. The welding torch 10 illustrated in Fig. 2 includes a torch body 11, a nozzle 12, a tip base 13, a contact tip 14, a support 15, a coil 17, and a coil holder 18.

The nozzle 12 has a cylindrical shape, and is fitted in an opening side of the torch body 11 on the lower side in the drawing, and thereby fixed to the torch body 11. The nozzle 12 is provided to jet carbon dioxide gas supplied from the shield gas supply device 40 (see Fig. 1) to the work 200 (see Fig. 1).

The tip base 13 is composed of a conductor and has a cylindrical shape, and is disposed inside the torch body 11 and the nozzle 12 while being in contact with the inner circumferential face of the torch body 11, and thereby fixed to the torch body 11. A plurality of gas supply ports 13a, which each penetrate through the side face of the tip base 13, are provided in a region of the tip base 13, the region being opposed to the inner circumferential face of the nozzle 12.

The contact tip 14 is composed of a conductor and has a cylindrical shape, and is fitted in an opening side of the tip base 13 on the lower side in the drawing, and thereby fixed to the torch body 11 via the tip base 13 in the inside of the nozzle 12. The contact tip 14 is detachably fitted in the tip base 13, and thus if the contact tip 14 is consumed with long-term use, the contact tip 14 can be exchanged.

The support 15 has a cylindrical shape, and is fitted in the tip base 13 projecting above the torch body 11 from the opening of the torch body 11 on the upper side in the drawing, and thereby fixed to the torch body 11 via the tip base 13. An undepicted substrate is provided on the illustratively upper side of the support 15, and bears the support 15.

The coil 17 is composed of a wire made of metal (for example, copper), and is wound on an outer side of the outer periphery of the nozzle 12. The coil 17 is connected to a conducting wire so as to receive power from the magnetic-field application source 50 (see Fig. 1).

The coil holder 18 is composed of an insulator or a material covered with an insulator, and has a ring shape. The coil holder 18 is fixed to the torch body 11 via the nozzle 12 outside the outer periphery of the nozzle 12, and accommodates the coil 17 therein.

The welding torch 10 of this embodiment has a supply path for supplying the flux-cored wire 100 from the upper side to the lower side in the drawing through the support 15, the tip base 13, and the contact tip 14. The inner diameter of a first part of the supply path provided inside the contact tip 14 is slightly larger than the diameter of the flux-cored wire 100, and thus the flux-cored wire 100 passes through the supply path while being in contact with the contact tip 14. On the other hand, the inner diameter of a second part of the supply path provided inside the support 15 and the tip base 13 is larger than the inner diameter of the first supply path part provided inside the contact tip 14, and thus carbon dioxide gas is supplied from the upper side in the drawing to the inside of the nozzle 12 through a gap provided between the second supply path part and the flux-cored wire 100 and through the gas supply ports 13a provided in the tip base 13.

The welding torch 10 of this embodiment is designed such that power is supplied from the welding source 20 (see Fig. 1) to the tip base 13 and in turn supplied from the tip base 13 to the flux-cored wire 100 via the contact tip 14.

The flux-cored wire 100 used in the welding apparatus 1 is now described. The flux-cored wire 100 of this embodiment includes a cylindrical steel sheath of which the inside is filled with flux described below.

To describe more specifically, the flux-cored wire 100 of this embodiment has, relative to the total mass of the wire, a total Ti equivalent of metal Ti, Ti oxide, and Ti compounds: 1.5 to 3.5 mass%, a total Si equivalent of metal Si, Si oxide, and Si compounds: 0.6 to 2.0 mass%, a total Al equivalent of metal Al, Al oxide, and Al compounds: 0.2 to 1.0 mass%, a total Zr equivalent of metal Zr, Zr oxide, and Zr compounds: 0.6 to 1.0 mass%, and a total Mg equivalent of metal Mg, Mg oxide, and Mg compounds: 0.2 to 0.8 mass%, the remainder consisting of Fe and inevitable impurities.

There are now described the reason for adding each component to the flux-cored wire 100 of this embodiment and the reason for limiting the composition of the flux-cored wire 100.

Ti equivalent: 1.5 to 3.5 mass%

$TiO_2$ increases viscosity of slug. Metal Ti and Ti compounds in the wire are each decomposed beneath the arc into ions to be combined with oxygen, leading to an effect equivalent to that of $TiO_2$. The Ti equivalent of 1.5 mass% or more leads to good arc stability and good slag coverage during welding. The Ti equivalent of 3.5 mass% or more leads to high viscosity of slug, which reduces the effect of magnetically stirring the molten pool (as described later in detail). Hence, the content of Ti in the wire is 1.5 to 3.5 mass% in the Ti equivalent.

Si equivalent: 0.6 to 2.0 mass%

$SiO_2$ increases viscosity of slug, and lowers solidification temperature of slug. Metal Si and Si compounds in the wire are each decomposed beneath the arc into ions to be combined with oxygen, leading to an effect equivalent to that of $SiO_2$. The Si equivalent of 0.6 mass% or more leads to good slag coverage. The Si equivalent of 2.0 mass% or more leads to high viscosity of slug, which reduces the effect of magnetically stirring the molten pool. Hence, the content of Si in the wire is 0.6 to 2.0 mass% in the Si equivalent.

Al equivalent: 0.2 to 1.0 mass%

$Al_2O_3$ increases viscosity of slug, and lowers solidification temperature of slug as with $SiO_2$. Metal Al and Al compounds in the wire are each decomposed beneath the arc into ions to be combined with oxygen, leading to an effect equivalent to that of $Al_2O_3$. The Al equivalent of 0.2 mass% or more leads to good slag coverage. The Al equivalent of 1.0 mass% or more leads to high viscosity of slug, which reduces the effect of magnetically stirring the molten pool. Hence, the content of Al in the wire is 0.2 to 1.0 mass% in the Al equivalent.

Zr equivalent: 0.6 to 1.0 mass%

$ZrO_2$ decreases viscosity of slug, and raises solidification temperature of slug. Metal Zr and Zr compounds in the wire are each decomposed beneath the arc into ions to be combined with oxygen, leading to an effect equivalent to that of $ZrO_2$. The Zr equivalent of 0.6 mass% or more leads to low viscosity of slug and high slag fluidity, allowing a molten pool to be easily stirred by magnetic force. The Zr equivalent of 1.0 mass% or more leads to an excessive amount of slug, which reduces the effect of magnetically stirring the molten pool. Hence, the content of Zr in the wire is 0.6 to 1.0 mass% in the Zr equivalent.

Mg equivalent: 0.2 to 0.8 mass%

MgO decreases viscosity of slug, and raises solidification temperature of slug as with $ZrO_2$. Metal Mg and Mg compounds in the wire are each decomposed beneath the arc into ions to be combined with oxygen, leading to an effect equivalent to that of MgO. The Mg equivalent of 0.2 mass% or more leads to low viscosity of slug and high slag fluidity, allowing a molten pool to be easily stirred by magnetic force. The Mg equivalent of 0.8 mass% or more leads to an excessive amount of slug, which reduces the effect of magnetically stirring the molten pool. Hence, the content of Mg in the wire is 0.2 to 0.8 mass% in the Mg equivalent.

The filling rate of flux in the flux-cored wire 100 (mass of flux relative to the total mass of the wire) is preferably, but not limited to, 10 to 25 mass% as with a typical flux-cored wire for horizontal fillet welding.

Remainder: Fe and inevitable impurities

The remainder of the composition of the flux-cored wire 100 as a whole consists of Fe and inevitable impurities. In addition to the above-described wire components, the wire composition may contain, in the flux, a small amount of elements such as Ca and Li as a fine adjuster for deoxidation or the like, and a small amount of elements such as Cu, Co, and N as an additional hardener for weld metal. Such elements have no influence on the object of the invention. The flux further contains a small amount of alkali metal compounds including metal elements other than the above-described elements. Examples of the inevitable impurities may include C, B, Ni, Mo, Cr, Nb, and V in the contents of C: less than 0.1 mass%, B: less than 0.0003 mass%, Ni: less than 0.1 mass%, Mo: less than 0.01 mass%, Cr: less than 0.30 mass%, Nb: less than 0.10 mass%, and V: less than 0.10 mass%. The inevitable impurities however are not limited to such components and/or numerical values.

Others

Examples of a method of manufacturing the flux-cored wire 100 include a method in which flux is spread in a longitudinal direction of a steel hoop, and then the steel hoop is formed into a circular section in a wrapping manner and drawn, and a method in which flux is filled in the inside of a large-diameter steel tube, and then the steel tube is drawn. However, the flux-cored wire 100 may be manufactured by any of the methods because each method has no influence on the invention. Furthermore, the flux-cored wire 100 may be of a seam type or a seamless type. Although the composition of the sheath is not necessary to be defined, mild steel material is typically used for the sheath in light of cost and drawability. The surface of the flux-cored wire 100 may be, but not necessarily, subjected to Cu plating.

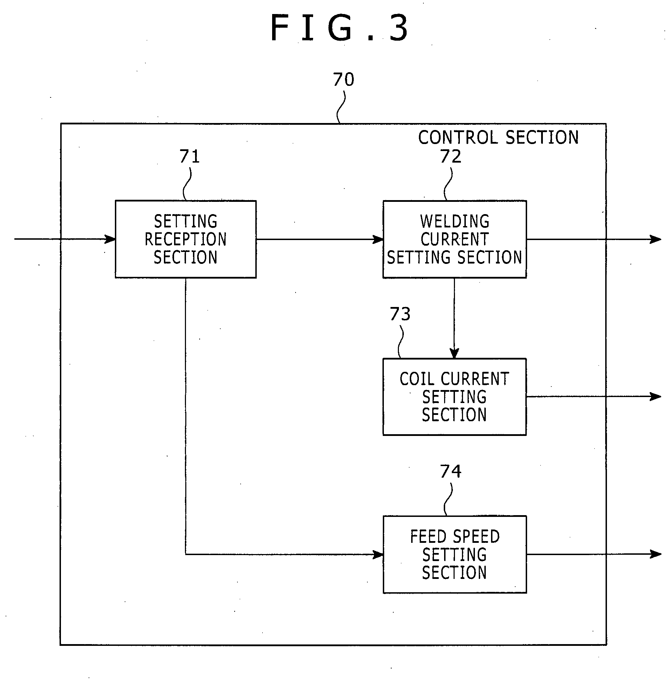

A control system for the welding apparatus 1 illustrated in Fig. 1 is now described. Fig. 3 is a block diagram for explaining a configuration of a control section 70 that is provided in the welding source 20 illustrated in Fig. 1, and controls operation of each section as a component of the welding apparatus 1. The control section 70 as an exemplary control unit includes a setting reception section 71 that receives various types of setting sent from an undepicted setting device (such as a computer device), a welding current setting section 72 that sets a magnitude of a welding current, which is supplied from the welding source 20 to the flux-cored wire 100 via the welding torch 10, based on the setting received by the setting reception section 71, and a coil current setting section 73 that sets a magnitude of a coil current, which is supplied from the magnetic-field application source 50 to the coil 17 provided in the welding torch 10, based on the magnitude of the welding current set by the welding current setting section 72. The control section 70 further includes a feed speed setting section 74 that sets feed speed of the flux-cored wire 100 to be fed from the wire feeder 30 to the welding torch 10 based on the setting received by the setting reception section 71.

The welding current setting section 72 sets a DC current value as the welding current. The coil current setting section 73 sets an AC current value as the coil current. A specific technique for setting each of the welding current and the coil current is described later.

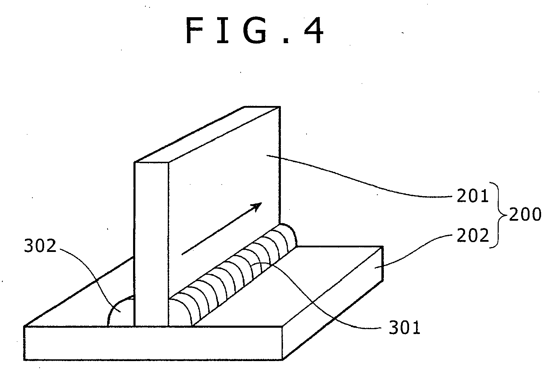

Fig. 4 is a diagram for explaining an exemplary configuration of the work 200 (weldment) fabricated using the welding apparatus 1 illustrated in Fig. 1. The work 200 illustrated in Fig. 4 is a T joint, in which an end face of a first steel plate 201 as an exemplary vertical plate is placed on a surface of a second steel plate 202 as an exemplary lower plate, thereby such two base plates (the first steel plate 201 and the second steel plate 202) to be welded form a T-shape. In addition, the work 200 is a fillet joint having a first weld 301 and a second weld 302, which are formed by performing horizontal fillet welding by the welding apparatus 1 on the first steel plate 201 and the second steel plate 202 disposed in the T shape at (two) corners between two planes intersecting at a substantially right angle of the steel plates.

This embodiment employs a primer-coated steel plate as each of the first steel plate 201 and the second steel plate 202. For the primer-coated steel plate, however, its end face may not be subjected to surface treatment using a shop primer. Examples of the shop primer used for the primer-coated steel plate include a nonorganic zinc primer, a wash primer, a zinc rich primer, and a non-zinc primer. A weldment fabrication method and a welding method described below may be applied to all the primer-coated steel plates.

Each of the first steel plate 201 and the second steel plate 202 has a thickness of 6 mm or more. Such a steel plate having a thickness of 6 mm or more is called medium or thick plate, which is widely used in the field of manufacturing ships and bridges.

A method of manufacturing the work 200 (method of welding the first steel plate 201 and the second steel plate 202) using the welding apparatus 1 of this embodiment is now described with reference to Figs. 1 to 4. The first steel plate 201 and the second steel plate 202 are disposed so as to form a T-shape as illustrated in Fig. 4 before start of the welding.

First, the wire feeder 30 starts feed of the flux-cored wire 100 to the welding torch 10, and the shield gas supply device 40 starts supply of carbon dioxide gas to the welding torch 10. In addition, the welding source 20 starts supply of a voltage (welding voltage) to the welding torch 10 (flux-cored wire 100), and the magnetic-field application source 50 starts supply of a coil current to the welding torch 10 (coil 17).

Subsequently, arc is generated between the flux-cored wire 100 and the work 200 to start welding. In addition, the tip of the flux-cored wire 100 is melted by the arc and moves toward the work 200. In the work 200, a target portion in each of the first steel plate 201 and the second steel plate 202 is also melted by the arc. As a result, such melted materials mixedly form a molten pool in a region of the work 200, the region being opposed to the tip of the flux-cored wire 100. In addition, slug come from the flux surfaces from the molten pool and covers the molten pool. The welding torch 10 is traveled from one end to the other end along a boundary, thereby the molten pool and the slug are sequentially formed along the boundary.

However, while the tip of the flux-cored wire 100 passes through the molten pool along with the travel of the welding torch 10, the molten pool is gradually less heated as it is more distant from the arc. Consequently, the molten pool is then gradually solidified as it is gradually cooled. This embodiment employs the flux-cored wire 100. Hence, the molten pool being cooled is gradually shifted into a state, in which the solidified weld metal is covered with the slug including solidified nonmetallic substances. The weld metal corresponds to each of the first weld 301 and the second weld 302.

In this way, the first weld 301 and the second weld 302 are formed. Subsequently, the slug covering each of the first weld 301 and the second weld 302 is removed, thereby the work 200 illustrated in Fig. 4 is produced.

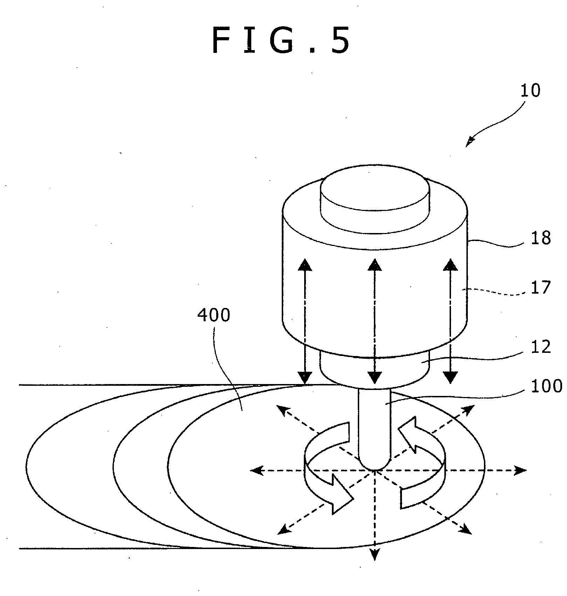

Fig. 5 is a schematic view illustrating a relationship between the welding torch 10 as well as the flux-cored wire 100 and a molten pool 400 formed in the undepicted work 200 in the manufacturing method (welding method) of this embodiment. Fig. 5 does not show the slug on the molten pool 400.

On the tip side of the flux-cored wire 100 projecting from the welding torch 10, the flux-cored wire 100 and the undepicted first and second steel plates 201 and 202 are each gradually melted as the welding current is supplied and thus arc is generated, so that the molten pool 400 is formed as described above. In addition, while the DC welding current flows from the flux-cored wire 100 attached to the welding torch 10 to the molten pool 400, the welding current radially flows along a plane direction in the molten pool 400 (as shown by a broken line in Fig. 5).

In this embodiment, an AC coil current is supplied to the coil 17 provided in the welding torch 10. The coil 17 accordingly generates an alternating magnetic field in a direction substantially perpendicular to the surface of the molten pool 400 (as shown by dash-dot line arrows in Fig. 5). The alternating magnetic field causes Lorentz force that is exerted on the welding current radially spreading in the molten pool 400. As a result, molten metal forming the molten pool 400 receives rotational force in each of forward and reverse directions as shown by empty arrows in Fig. 5, and the molten metal repeats forward and reverse rotations in a period corresponding to the frequency of the coil current.

This embodiment employs the primer-coated steel plate as each of the first steel plate 201 and the second steel plate 202. Hence, the shop primer applied on each of the first steel plate 201 and the second steel plate 202 (particularly the second steel plate 202) evaporates and enters the molten pool 400 during welding, and pores called pits or blowholes are easily formed in the surface and the inside of the solidified weld metal (the first weld 301 or the second weld 302). The term "pit" refers to a pore opened in the surface of a bead composed of weld metal. The term "blowhole" refers to a pore confirmed in the inside of weld metal. Such a pore originating in a gas (primer gas) come from the shop primer easily becomes large compared with a typical pore due to a defect such as insufficient shield of a shield gas.

Such a large blowhole in the inside of a bead may lower tensile strength and fatigue strength of a weld. Such a large pit exposed on a bead surface requires repair after welding, leading to an increase in the number of steps.

In this embodiment, the work 200 is fabricated such that the control section 70 (specifically a combination of the welding current setting section 72 and the coil current setting section 73) sets the welding current I and the coil current as a source of the magnetic flux density B in conjunction with each other such that the product of the welding current I and the magnetic flux density B satisfies $20000 \leq I \times B \leq 30000$, and preferably $20000 \leq I \times B \leq 27000$, where I represents the magnitude (average) of the welding current (A), and B represents the magnitude (effective value) of the magnetic flux density caused by the coil current (mT). The magnetic flux density B is defined by a value (effective value) measured with a gaussmeter (teslameter) at a position of the tip of the flux-cored wire 100 extending from the welding torch 10 (extension of the flux-cored wire 100: a position 25 mm away from the welding torch 10 in this exemplary case).

When the coil 17 is disposed around the flux-cored wire 100, and when a magnetic field is applied substantially perpendicularly to the surface of the molten pool 400, Lorentz force is exerted on the welding current radially spreading in the molten pool 400, and the molten metal forming the molten pool 400 rotates. Using the alternating magnetic field periodically inverts the magnetic field, so that a convection direction of the molten metal is also periodically inverted. Consequently pores are less likely to grow along one direction. Hence, the primer gas evaporated beneath the arc is less likely to enter the close molten pool 400. Alternatively, even if the primer gas enters such a molten pool 400, the primer gas is less likely to grow into pores. The primer gas therefore comes around the front side of the molten pool 400, the front side being not covered with the molten metal, and is discharged to the outside air. Hence, only small-diameter blowholes remain in the inside of a bead produced by welding, and a greatly grown blowhole, which will become a pit on the surface of the bead, is less likely to be formed. In this way, it is possible to suppress occurrence of poor appearance of a bead surface due to pores originating in the primer. In other words, it is possible to produce a beautiful bead shape.

When the magnetic-field application source 50 supplies a DC current as the coil current, the molten metal continuously rotates in one direction. In such a case, a formation direction of the weld bead is biased to one side, and the primer gas entering the molten pool 400 grows pores in one direction along its rotational direction, which reduces the effect of suppressing growth of pores. To suppress pores, therefore, it is important to use an AC current as the coil current to periodically invert the convection direction of the molten metal.

While any of waveforms such as a sine wave, a rectangular wave, and a chopping wave may be used as the waveform of the coil current (AC current) supplied to the coil 17, the frequency (fundamental frequency) of the coil current is set to 2 to 5 Hz. If the frequency f of the coil current is too low, the weld bead meanders in accordance with the rotational direction of the molten pool 400, and thus beautiful bead appearance may not be obtained. If the frequency f of the coil current is too high, it is difficult to invert the convection direction of the molten pool 400 even if the magnetic field is inverted, and thus a sufficient stirring effect may not be obtained.

In this embodiment, since the flux-cored wire 100 is used for welding, a large amount of high-viscosity slug is formed over the molten pool 400. Hence, if an alternating magnetic field is simply applied by the coil 17, the molten metal forming the molten pool 400 is constrained by the slug and is not sufficiently stirred, and thus the pore suppression effect is less likely to be provided. It is therefore important to lower the viscosity of each of the slug and the molten metal at high temperature. To lower the viscosity of the molten pool 400 at high temperature under the alternating magnetic field, among the components of the flux configuring the flux-cored wire 100, Ti, Si, Al, Zr, and Mg are appropriately mixed so as to satisfy the above-described ranges relative to the total mass of the wire.

Since formation tendency of the pores caused by the evaporated primer typically increases with welding speed, welding speed is controlled to be relatively low at the point of production, which is a large factor in disturbing improvement in production efficiency. The pores are therefore decreased by setting each of the welding current I and the magnetic flux density B to be within the above-described range. As a result, welding speed can be increased.

Examples

Hereinafter, the invention is described further in detail according to Examples. However, the invention is not limited to the Examples within the scope without departing from the gist of the invention.

The basic welding condition was as follows.

- First steel plate 201 and second steel plate 202: JIS G3106 SM490A inorganic zinc primer-coated steel plate (coating thickness 30 $\mu$m), 12 mm thick, 75 mm wide, and 475 mm long.
- Inclination angle of welding torch 10: 45°.
- Extension of flux-cored wire 100 from welding torch 10: 25 mm.
- Target position: Root.
- Diameter of flux-cored wire 100: 1.4 mm.

[Relationship between Welding Current and Magnetic Flux Density]

First, the inventors have made investigations on a relationship between the welding current I (average) supplied to the flux-cored wire 100 for formation of the molten pool 400, and the magnetic flux density B (effective value) of the alternating magnetic field supplied to the molten pool 400. Tables 1 to 4 show setting conditions in such investigations and obtained results.

Table 1

| Number | Frequency f (Hz) | Magneticflux B (mT) | Feed speed (m/min) | Welding speed (cm/min) | Welding current I (A) | Welding voltage (V) | Leg length (mm) | I × B (A·mT) | The number of BH (3mm or more) |
|---|---|---|---|---|---|---|---|---|---|
| 1 | - | 0 | 11.4 | 60 | 330 | 33.3 | 6.5 | 0 | 54 |
| 2 | 3 | 28 | 11.4 | 60 | 330 | 33.3 | 6.5 | 9240 | 53 |
| 3 | 3 | 42 | 11.4 | 60 | 330 | 33.3 | 6.5 | 13860 | 43 |
| 4 | 3 | 58 | 11.4 | 60 | 330 | 33.3 | 6.5 | 19140 | 13 |
| 5 | 3 | 64 | 11.4 | 60 | 330 | 33.3 | 6.5 | 21120 | 6 |
| 6 | 3 | 68 | 11.4 | 60 | 330 | 33.3 | 6.5 | 22440 | 8 |
| 7 | - | 0 | 11.4 | 60 | 330 | 33.3 | 6.5 | 0 | 56 |
| 8 | 3 | 26 | 11.4 | 60 | 330 | 33.3 | 6.5 | 8700 | 51 |
| 9 | 3 | 43 | 11.4 | 60 | 330 | 33.3 | 6.5 | 14200 | 47 |
| 10 | 3 | 58 | 11.4 | 60 | 330 | 33.3 | 6.5 | 19300 | 14 |
| 11 | 3 | 63 | 11.4 | 60 | 330 | 33.3 | 6.5 | 20700 | 8 |
| 12 | 3 | 70 | 11.4 | 60 | 330 | 33.3 | 6.5 | 23100 | 7 |
| 13 | - | 0 | 11.4 | 60 | 330 | 33.3 | 6.5 | 0 | 58 |
| 14 | 3 | 27 | 11.4 | 60 | 330 | 33.3 | 6.5 | 8800 | 53 |
| 15 | 3 | 42 | 11.4 | 60 | 330 | 33.3 | 6.5 | 13900 | 50 |
| 16 | 3 | 56 | 11.4 | 60 | 330 | 33.3 | 6.5 | 18400 | 30 |
| 17 | 3 | 62 | 11.4 | 60 | 330 | 33.3 | 6.5 | 20400 | 9 |
| 18 | 3 | 72 | 11.4 | 60 | 330 | 33.3 | 6.5 | 23600 | 5 |

Table 2

| Number | Frequency f (Hz) | Magneticflux B (mT) | Feed speed (m/min) | Welding speed (cm/min) | Welding current I (A) | Welding voltage (V) | Leg length (mm) | I × B (A·mT) | The number of BH (3mm or more) |
|---|---|---|---|---|---|---|---|---|---|
| 19 | - | 0 | 15.2 | 80 | 390 | 37.7 | 6.5 | 0 | 26 |
| 20 | 3 | 28 | 15.2 | 80 | 390 | 37.7 | 6.5 | 10920 | 25 |
| 21 | 3 | 42 | 15.2 | 80 | 390 | 37.7 | 6.5 | 16380 | 13 |
| 22 | 3 | 58 | 15.2 | 80 | 390 | 37.7 | 6.5 | 22620 | 5 |
| 23 | 3 | 64 | 15.2 | 80 | 390 | 37.7 | 6.5 | 24960 | 0 |
| 24 | 3 | 68 | 15.2 | 80 | 390 | 37.7 | 6.5 | 26520 | 0 |
| 25 | - | 0 | 15.2 | 80 | 390 | 37.7 | 6.5 | 0 | 24 |
| 26 | 3 | 24 | 15.2 | 80 | 390 | 37.7 | 6.5 | 9500 | 26 |
| 27 | 3 | 42 | 15.2 | 80 | 390 | 37.7 | 6.5 | 16500 | 12 |
| 28 | 3 | 57 | 15.2 | 80 | 390 | 37.7 | 6.5 | 22300 | 6 |
| 29 | 3 | 64 | 15.2 | 80 | 390 | 37.7 | 6.5 | 25000 | 0 |
| 30 | 3 | 69 | 15.2 | 80 | 390 | 37.7 | 6.5 | 27000 | 0 |
| 31 | - | 0 | 15.2 | 80 | 390 | 37.7 | 6.5 | 0 | 22 |
| 32 | 3 | 25 | 15.2 | 80 | 390 | 37.7 | 6.5 | 9700 | 27 |
| 33 | 3 | 44 | 15.2 | 80 | 390 | 37.7 | 6.5 | 17200 | 13 |
| 34 | 3 | 57 | 15.2 | 80 | 390 | 37.7 | 6.5 | 22100 | 5 |
| 35 | 3 | 64 | 15.2 | 80 | 390 | 37.7 | 6.5 | 24800 | 0 |
| 36 | 3 | 71 | 15.2 | 80 | 390 | 37.7 | 6.5 | 27500 | 0 |

Table 3

| Number | Frequency f (Hz) | Magnetic flux B (mT) | Feed speed (m/min) | Welding speed (cm/min) | Welding current I (A) | Welding voltage (V) | Leg length (mm) | I × B (A·mT) | The number of BH (3mm or more) |
|---|---|---|---|---|---|---|---|---|---|
| 37 | - | 0 | 18.0 | 95 | 440 | 40.6 | 6.5 | 0 | 27 |
| 38 | 3 | 28 | 18.0 | 95 | 440 | 40.6 | 6.5 | 12320 | 28 |
| 39 | 3 | 42 | 18.0 | 95 | 440 | 40.6 | 6.5 | 18480 | 28 |
| 40 | 3 | 58 | 18.0 | 95 | 440 | 40.6 | 6.5 | 25520 | 7 |
| 41 | 3 | 64 | 18.0 | 95 | 440 | 40.6 | 6.5 | 28160 | 8 |
| 42 | 3 | 68 | 18.0 | 95 | 440 | 40.6 | 6.5 | 29920 | 19 |
| 43 | - | 0 | 18.0 | 95 | 440 | 40.6 | 6.5 | 0 | 33 |
| 44 | 3 | 30 | 18.0 | 95 | 440 | 40.6 | 6.5 | 13000 | 29 |
| 45 | 3 | 43 | 18.0 | 95 | 440 | 40.6 | 6.5 | 19100 | 26 |
| 46 | 3 | 59 | 18.0 | 95 | 440 | 40.6 | 6.5 | 26000 | 8 |
| 47 | 3 | 63 | 18.0 | 95 | 440 | 40.6 | 6.5 | 27600 | 13 |
| 48 | 3 | 73 | 18.0 | 95 | 440 | 40.6 | 6.5 | 32200 | 24 |
| 49 | - | 0 | 18.0 | 95 | 440 | 40.6 | 6.5 | 0 | 34 |
| 50 | 3 | 31 | 18.0 | 95 | 440 | 40.6 | 6.5 | 13500 | 23 |
| 51 | 3 | 43 | 18.0 | 95 | 440 | 40.6 | 6.5 | 18700 | 21 |
| 52 | 3 | 58 | 18.0 | 95 | 440 | 40.6 | 6.5 | 25400 | 6 |
| 53 | 3 | 63 | 18.0 | 95 | 440 | 40.6 | 6.5 | 27900 | 15 |
| 54 | 3 | 75 | 18.0 | 95 | 440 | 40.6 | 6.5 | 33000 | 29 |
| 55 | 3 | 48 | 18.0 | 95 | 440 | 40.6 | 6.5 | 21000 | 8 |
| 56 | 3 | 50 | 18.0 | 95 | 440 | 40.6 | 6.5 | 22100 | 9 |
| 57 | 3 | 53 | 18.0 | 95 | 440 | 40.6 | 6.5 | 23500 | 5 |
| 58 | 3 | 55 | 18.0 | 95 | 440 | 40.6 | 6.5 | 24300 | 5 |
| 59 | 3 | 58 | 18.0 | 95 | 440 | 40.6 | 6.5 | 25300 | 5 |
| 60 | 3 | 60 | 18.0 | 95 | 440 | 40.6 | 6.5 | 26600 | 3 |
| 61 | 3 | 62 | 18.0 | 95 | 440 | 40.6 | 6.5 | 27300 | 4 |

(continued)

| Number | Frequency f (Hz) | Magnetic flux B (mT) | Feed speed (m/min) | Welding speed (cm/min) | Welding current I (A) | Welding voltage (V) | Leg length (mm) | $I \times B$ (A·mT) | The number of BH (3mm or more) |
|---|---|---|---|---|---|---|---|---|---|
| 62 | 3 | 70 | 18.0 | 95 | 440 | 40.6 | 6.5 | 31000 | 25 |
| 63 | 3 | 75 | 18.0 | 95 | 440 | 40.6 | 6.5 | 33000 | 26 |
| 64 | 3 | 73 | 18.0 | 95 | 440 | 40.6 | 6.5 | 32200 | 32 |
| 65 | 3 | 76 | 18.0 | 95 | 440 | 40.6 | 6.5 | 33500 | 34 |
| 66 | 3 | 78 | 18.0 | 95 | 440 | 40.6 | 6.5 | 34200 | 29 |
| 67 | 3 | 78 | 18.0 | 95 | 440 | 40.6 | 6.5 | 34500 | 28 |
| 68 | 3 | 79 | 18.0 | 95 | 440 | 40.6 | 6.5 | 34900 | 27 |
| 69 | 3 | 80 | 18.0 | 95 | 440 | 40.6 | 6.5 | 35100 | 31 |
| 70 | 3 | 85 | 18.0 | 95 | 440 | 40.6 | 6.5 | 37600 | 33 |
| 71 | 3 | 86 | 18.0 | 95 | 440 | 40.6 | 6.5 | 37900 | 27 |
| 72 | 3 | 87 | 18.0 | 95 | 440 | 40.6 | 6.5 | 38200 | 29 |
| 73 | 3 | 89 | 18.0 | 95 | 440 | 40.6 | 6.5 | 39200 | 34 |
| 74 | 3 | 87 | 18.0 | 95 | 440 | 40.6 | 6.5 | 38400 | 37 |
| 75 | 3 | 73 | 18.0 | 95 | 440 | 40.6 | 6.5 | 32100 | 20 |
| 76 | 3 | 71 | 18.0 | 95 | 440 | 40.6 | 6.5 | 31100 | 19 |
| 77 | 3 | 72 | 18.0 | 95 | 440 | 40.6 | 6.5 | 31500 | 18 |
| 78 | 3 | 72 | 18.0 | 95 | 440 | 40.6 | 6.5 | 31600 | 21 |
| 79 | 3 | 70 | 18.0 | 95 | 440 | 40.6 | 6.5 | 30900 | 22 |
| 80 | 3 | 68 | 18.0 | 95 | 440 | 40.6 | 6.5 | 29800 | 28 |

Table 4

| Number | Frequency f (Hz) | Magnetic flux B (mT) | Feed speed (m/min) | Welding speed (cm/min) | Welding current I (A) | Welding voltage (V) | Leg length (mm) | I × B (A•mT) | The number of BH (3mm or more) |
|---|---|---|---|---|---|---|---|---|---|
| 81 | 3 | 68 | 12.1 | 63 | 345 | 34.1 | 6.5 | 23460 | 3 |
| 82 | 3 | 68 | 12.7 | 67 | 356 | 34.8 | 6.5 | 24208 | 4 |
| 83 | 3 | 68 | 13.3 | 70 | 365 | 35.7 | 6.5 | 24820 | 8 |
| 84 | 3 | 68 | 13.9 | 73 | 375 | 36.3 | 6.5 | 25500 | 0 |
| 85 | 3 | 68 | 14.5 | 76 | 385 | 36.8 | 6.5 | 26180 | 7 |
| 86 | 3 | 58 | 15.7 | 82 | 405 | 38.0 | 6.5 | 23490 | 4 |
| 87 | 3 | 58 | 16.3 | 86 | 418 | 38.6 | 6.5 | 24244 | 7 |
| 88 | 3 | 58 | 16.9 | 89 | 430 | 39.2 | 6.5 | 24940 | 2 |
| 89 | 3 | 58 | 17.5 | 92 | 434 | 40.1 | 6.5 | 25172 | 6 |
| 90 | 3 | 58 | 18.1 | 95 | 440 | 40.8 | 6.5 | 25520 | 2 |
| 91 | 3 | 64 | 13.1 | 69 | 369 | 35.8 | 6.5 | 23600 | 8 |
| 92 | 3 | 64 | 14.0 | 73 | 372 | 36.1 | 6.5 | 23800 | 7 |
| 93 | 3 | 64 | 14.1 | 74 | 373 | 36.4 | 6.5 | 23900 | 6 |
| 94 | 3 | 64 | 13.8 | 72 | 377 | 36.5 | 6.5 | 24100 | 2 |
| 95 | 3 | 64 | 14.4 | 76 | 383 | 36.8 | 6.5 | 24500 | 0 |
| 96 | 3 | 64 | 15.0 | 79 | 388 | 37.2 | 6.5 | 24800 | 0 |
| 97 | 3 | 64 | 15.2 | 80 | 389 | 37.3 | 6.5 | 24900 | 1 |
| 98 | 3 | 64 | 15.8 | 83 | 397 | 37.8 | 6.5 | 25400 | 1 |
| 99 | 3 | 64 | 15.5 | 81 | 392 | 37.7 | 6.5 | 25100 | 2 |
| 100 | 3 | 64 | 15.4 | 81 | 400 | 37.9 | 6.5 | 25600 | 3 |
| 101 | 3 | 60 | 17.4 | 91 | 435 | 40.2 | 6.5 | 26100 | 0 |
| 102 | 3 | 60 | 17.8 | 93 | 437 | 40.5 | 6.5 | 26200 | 5 |
| 103 | 3 | 60 | 17.9 | 94 | 438 | 40.1 | 6.5 | 26300 | 6 |
| 104 | 3 | 60 | 18.2 | 96 | 442 | 41.0 | 6.5 | 26500 | 4 |

(continued)

| Number | Frequency f (Hz) | Magnetic flux B (mT) | Feed speed (m/min) | Welding speed (cm/min) | Welding current I (A) | Welding voltage (V) | Leg length (mm) | I × B (A•mT) | The number of BH (3mm or more) |
|---|---|---|---|---|---|---|---|---|---|
| 105 | 3 | 60 | 18.5 | 97 | 453 | 42.1 | 6.5 | 27200 | 7 |
| 106 | 3 | 60 | 18.9 | 99 | 458 | 42.3 | 6.5 | 27500 | 3 |
| 107 | 3 | 60 | 19.0 | 100 | 465 | 43.1 | 6.5 | 27900 | 2 |
| 108 | 3 | 62 | 18.5 | 97 | 452 | 41.8 | 6.5 | 28000 | 2 |
| 109 | 3 | 62 | 18.9 | 99 | 453 | 41.8 | 6.5 | 28100 | 3 |
| 110 | 3 | 62 | 19.1 | 100 | 458 | 42.3 | 6.5 | 28400 | 4 |
| 111 | 3 | 62 | 12.4 | 65 | 342 | 34.0 | 6.5 | 21200 | 5 |
| 112 | 3 | 62 | 13.4 | 70 | 361 | 35.1 | 6.5 | 22400 | 6 |
| 113 | 3 | 62 | 14.2 | 75 | 371 | 35.9 | 6.5 | 23000 | 2 |
| 114 | 3 | 62 | 15.4 | 81 | 389 | 37.8 | 6.5 | 24100 | 3 |
| 115 | 3 | 62 | 16.2 | 85 | 410 | 38.9 | 6.5 | 25400 | 5 |
| 116 | 3 | 62 | 10.7 | 56 | 327 | 32.7 | 6.5 | 20300 | 2 |
| 117 | 3 | 62 | 11.5 | 60 | 346 | 34.0 | 6.5 | 21450 | 1 |
| 118 | 3 | 62 | 13.1 | 69 | 360 | 34.8 | 6.5 | 22300 | 2 |
| 119 | 3 | 62 | 14.9 | 78 | 385 | 37.1 | 6.5 | 23900 | 6 |
| 120 | 3 | 62 | 15.1 | 79 | 389 | 37.3 | 6.5 | 24100 | 2 |

Tables 1 to 4 each show sample number, frequency f (Hz) of coil current, magnetic flux density B (mT) generated by the coil current, feed speed (m/min) of the flux-cored wire 100, welding speed (cm/min), welding current I (A) supplied to the flux-cored wire 100, welding voltage (V) for the welding current I, leg length (mm) of a bead provided by welding, a product (A • mT) of welding current I and magnetic flux density B, and the number (the number of BH) of blowholes (mentioned as BH) of 3 mm or more in length in the bead provided by welding. In Tables 1 to 3, "-" in the column of frequency f represents that the coil current itself is not supplied. The number of blowholes shown in each of Tables 1 to 4 represents a result of measurement in a continuous 400 mm region of a stationary portion (intermediate portion) other than a start portion (a leading edge side of the welding operation) and an end portion (a trailing edge side of the welding operation) in a weld (weld bead) provided by welding operation. The number of blowholes is measured in the same manner in each of Tables 5 and 6 described later. In this investigation, the frequency f of the coil current is fixed to 3 Hz (sine wave) in all samples other than samples 1, 7, 13, 19, 25, 31, 37, 43, and 49, i.e., sample numbers 2 to 6, 8 to 12, 14 to 18, 20 to 24, 26 to 30, 32 to 36, 38 to 42, 44 to 48, and 50 to 120.

Table 1 (sample numbers 1 to 18) shows a case where the magnetic flux density B is varied while the welding current I is fixed to 330 A, and the welding speed is fixed to 60 cm/min. Table 2 (sample numbers 9 to 36) shows a case where the magnetic flux density B is varied while the welding current I is fixed to 390 A, and the welding speed is fixed to 80 cm/min. Table 3 (sample numbers 37 to 80) shows a case where the magnetic flux density B is varied while the welding current I is fixed to 440 A, and the welding speed is fixed to 95 cm/min. In Tables 1 to 3, the product (I $\times$ B) of the welding current I and the magnetic flux density B include products that fall within the range of 20000 to 30000 and products that do not fall within such a range. Table 4 (sample numbers 81 to 120) shows a case where the product (I $\times$ B) of the welding current I and the magnetic flux density B is controlled to fall within the range of 20000 to 30000 while the welding current I and the magnetic flux density B are each varied.

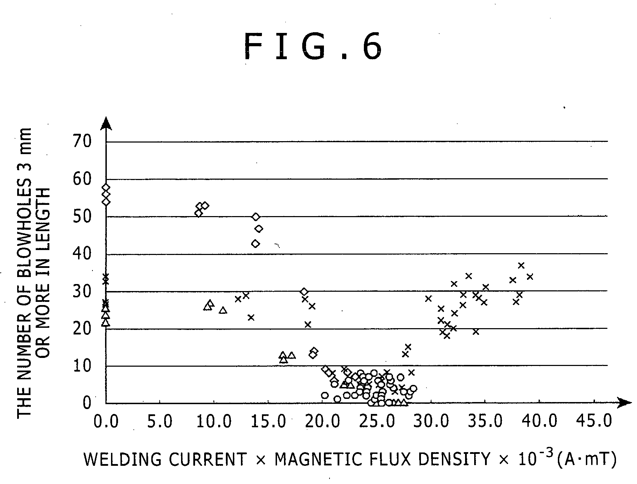

Fig. 6 is a graph generated based on Tables 1 to 4 while a horizontal axis represents the product (A•mT) of the welding current I and the magnetic flux density B, and a vertical axis represents the number of blowholes of 3 mm or more in length in a bead. In Fig. 6, samples listed in Tables 1, 2, 3, and 4 are plotted with "◇", "Δ", "×", and "○", respectively.

Tables 1 to 4 and Fig. 6 reveal that the number of blowholes that have grown into 3 mm or more in length can be decreased in the range where the product of the welding current I and the magnetic flux density B is 20000 to 30000 compared with the case where the product is less than 20000 or more than 30000.

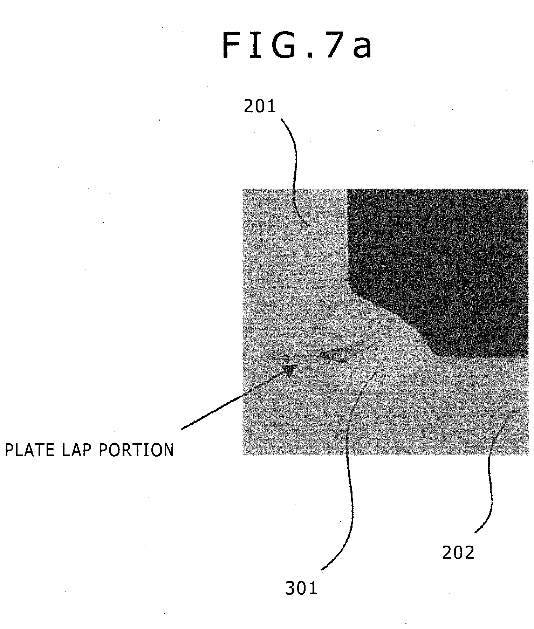

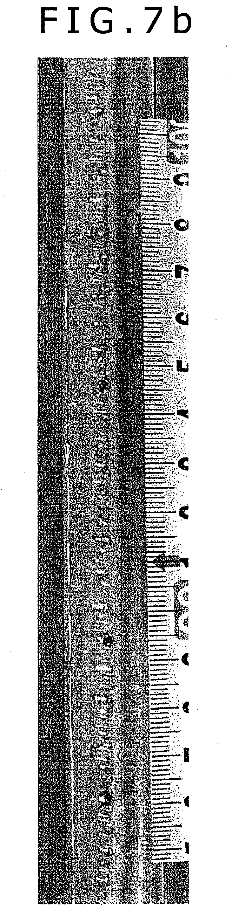

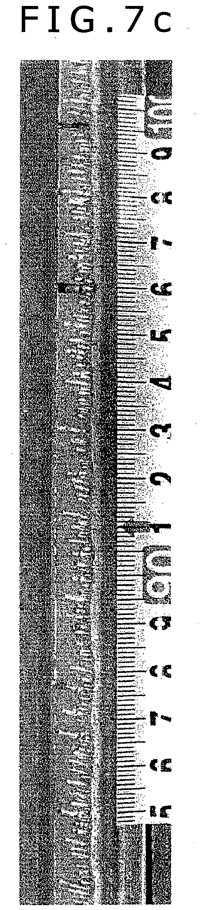

Figs. 7a to 7c are diagrams for explaining pores formed in the first weld 301 (bead) in the work 200 illustrated in Fig. 4. Fig. 7a illustrates longitudinal section views of the first steel plate 201, the second steel plate 202, and the first weld 301. Fig. 7b illustrates a fracture of the first weld 301 for the product of the welding current I and the magnetic flux density B of 20000 to 30000. Fig. 7c illustrates a fracture of the first weld 301 for the product of the welding current I and the magnetic flux density B of less than 20000 or more than 30000.

When the first steel plate 201 and the second steel plate 202 are formed into a T-fillet joint, as illustrated in Fig. 7a, there is a plate lap portion in which an end face of the first steel plate 201 is in contact with the second steel plate 202. In the plate lap portion, the shop primer evaporated from the second steel plate 202 has its escape cut off and thus enters the first weld 301, and is formed into a pore extending toward a bead surface of the first weld 301.

When welding is performed while the product of the welding current I and the magnetic flux density B is set to be within the range of 20000 to 30000, as illustrated in Fig. 7b, pores are less likely to grow, and large expansion of blowholes is suppressed, and formation of pits is also suppressed.

On the other hand, when welding is performed while the product of the welding current I and the magnetic flux density B is set to be less than 20000 or more than 30000, as illustrated in Fig. 7c, pores easily grow, and blowholes are greatly expanded, and some of blowholes arrive at the bead surface and are formed into pits.

[Frequency of Coil Current]

The inventors have made further investigations on the frequency of the alternating magnetic field supplied to the molten pool 400, i.e., the frequency f of the coil current. Table 5 shows setting conditions in such investigations and obtained results.

Table 5

| Number | Frequency f (Hz) | Magnetic flux B (mT) | Welding speed (cm/min) | Welding current I (A) | Welding voltage (V) | I $\times$ B (A-mT) | The number of BH (3mm or more) |
|---|---|---|---|---|---|---|---|
| 121 | 0 | 0 | 60 | 330 | 33.3 | 0 | 54 |
| 122 | 0 | 68 | 60 | 330 | 33.3 | 22440 | 42 |

(continued)

| Number | Frequency f (Hz) | Magnetic flux B (mT) | Welding speed (cm/min) | Welding current I (A) | Welding voltage (V) | I × B (A-mT) | The number of BH (3mm or more) |
|---|---|---|---|---|---|---|---|
| 123 | 0 | 0 | 80 | 390 | 37.7 | 0 | 26 |
| 124 | 0 | 68 | 80 | 390 | 37.7 | 26520 | 35 |
| 125 | 0 | 0 | 95 | 440 | 40.6 | 0 | 27 |
| 126 | 0 | 68 | 95 | 440 | 40.6 | 29920 | 24 |
| 127 | 3 | 68 | 80 | 390 | 37.7 | 26520 | 0 |
| 128 | 3.5 | 68 | 80 | 390 | 37.7 | 26520 | 3 |
| 129 | 2.5 | 68 | 80 | 390 | 37.7 | 26520 | 7 |
| 130 | 2 | 68 | 80 | 390 | 37.7 | 26520 | 15 |
| 131 | 1.5 | 68 | 80 | 390 | 37.7 | 26520 | 10 |
| 132 | 4 | 68 | 80 | 390 | 37.7 | 26520 | 5 |
| 133 | 4.5 | 68 | 80 | 390 | 37.7 | 26520 | 4 |
| 134 | 5 | 68 | 80 | 390 | 37.7 | 26520 | 8 |
| 135 | 5.5 | 68 | 80 | 390 | 37.7 | 26520 | 14 |
| 136 | 6 | 68 | 80 | 390 | 37.7 | 26520 | 8 |
| 137 | 8 | 68 | 80 | 390 | 37.7 | 26520 | 11 |
| 138 | 10 | 68 | 80 | 390 | 37.7 | 26520 | 15 |
| 139 | 1 | 68 | 80 | 390 | 37.7 | 26520 | 21 |
| 140 | 4 | 68 | 80 | 390 | 37.7 | 26520 | 0 |
| 141 | 5 | 68 | 80 | 390 | 37.7 | 26520 | 0 |
| 142 | 2 | 68 | 80 | 390 | 37.7 | 26520 | 0 |
| 143 | 3 | 68 | 80 | 390 | 37.7 | 26520 | 5 |
| 144 | 20 | 68 | 80 | 390 | 37.7 | 26520 | 59 |
| 145 | 15 | 68 | 80 | 390 | 37.7 | 26520 | 29 |
| 146 | 8 | 68 | 80 | 390 | 37.7 | 26520 | 24 |
| 147 | 12 | 68 | 80 | 390 | 37.7 | 26520 | 22 |
| 148 | 7 | 68 | 80 | 390 | 37.7 | 26520 | 15 |
| 149 | 1 | 68 | 80 | 390 | 37.7 | 26520 | 5 |

Table 5 shows sample number (sample numbers 121 to 149), frequency f (Hz) of coil current, magnetic flux density B (mT) generated by the coil current, welding speed (cm/min), welding current I (A) supplied to the flux-cored wire 100, welding voltage (V) for the welding current I, leg length (mm) of a bead provided by welding, a product (A•mT) of welding current I and magnetic flux density B, and the number (the number of BH) of blowholes (mentioned as BH) of 3 mm or more in length in the bead provided by welding. In this exemplary case, the frequency f of the coil current is varied within a range of 0 Hz (the coil current is not supplied) to 20 Hz. In Table 5, a case where the column of frequency f shows "0" and the column of magnetic flux density B also shows "0" represents a case where the coil current itself is not supplied. A case where the column of frequency f does not show "0" and the column of magnetic flux density B also does not show "0" represents a case where a DC current is supplied as the coil current, thereby a DC magnetic field is generated.

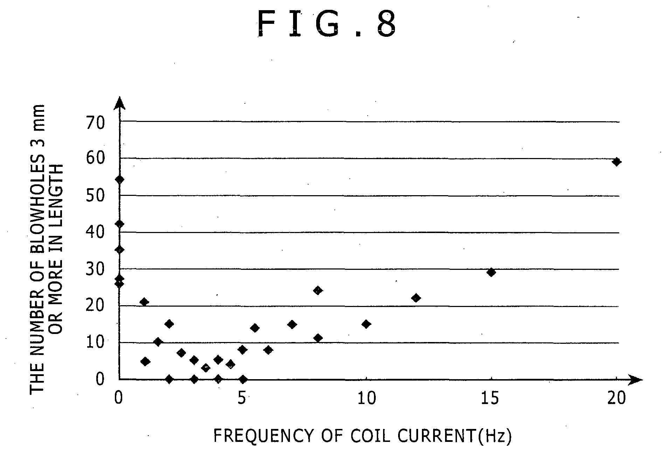

Fig. 8 is a graph generated based on Table 5 while a horizontal axis represents the frequency of the coil current, and a vertical axis represents the number of blowholes of 3 mm or more in length in a bead. In Fig. 8, the samples listed in Table 5 are plotted by "♦".

Table 5 and Fig. 8 reveal that the number of blowholes that has grown into 3 mm or more in length can be decreased in the range where the frequency f of the coil current is 2 to 5 Hz compared with the case where the frequency f of the coil current is less than 2 Hz or more than 5Hz.

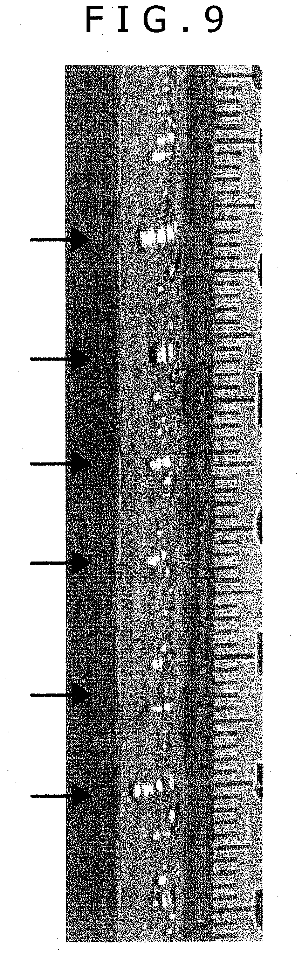

Fig. 9 illustrates a fracture of the first weld 301 for the frequency f of the coil current of 0.5 Hz.

As illustrated in Fig. 9, if the frequency f of the coil current is too low, dilution in the first weld 301 (bead) periodically varies in accordance with the frequency f, and a large pore (arrowed in the drawing) grows in response to such a variation.

[Composition of Flux-Cored Wire]

Furthermore, the inventors have made investigations on the composition of the flux-cored wire 100. Table 6 shows mainly added elements of the flux-cored wire 100 in each of Examples 1 to 10 and comparative examples 1 to 10, and obtained results.

Table 6

| | Number | Ti | Si | Al | Zr | Mg | Bead shape | The number of BH (3mm or more) |
|---|---|---|---|---|---|---|---|---|
| Example | 1 | 1.5 | 0.9 | 0.5 | 0.8 | 0.4 | ○ | 3 |
| | 2 | 3.5 | 1.2 | 0.7 | 0.8 | 0.6 | ○ | 7 |
| | 3 | 2.2 | 0.6 | 0.8 | 0.9 | 0.6 | ○ | 0 |
| | 4 | 2.5 | 2 | 0.6 | 1 | 0.3 | ○ | 6 |
| | 5 | 3 | 1.4 | 0.2 | 0.8 | 0.7 | ○ | 2 |
| | 6 | 1.8 | 1 | 1 | 0.9 | 0.7 | ○ | 6 |
| | 7 | 1.9 | 1.6 | 0.6 | 0.6 | 0.5 | ○ | 4 |
| | 8 | 2.7 | 1.5 | 0.3 | 1 | 0.6 | ○ | 0 |
| | 9 | 3.2 | 1.8 | 0.7 | 0.8 | 0.2 | ○ | 0 |
| | 10 | 3 | 1.1 | 0.7 | 0.8 | 0.8 | ○ | 5 |
| | | | | | | | | |
| Comparative example | 1 | 1.4 | 1.1 | 0.5 | 0.6 | 0.3 | × | 5 |
| | 2 | 3.5 | 1 | 0.9 | 0.8 | 0.4 | ○ | 13 |
| | 3 | 2.2 | 0.5 | 0.2 | 1.5 | 0.7 | × | 6 |
| | 4 | 2.6 | 2.2 | 0.9 | 0.9 | 0.6 | ○ | 17 |
| | 5 | 2 | 0.8 | 0.1 | 1.2 | 0.7 | × | 4 |
| | 6 | 2.9 | 1.8 | 1.1 | 0.9 | 0.4 | ○ | 24 |
| | 7 | 2.3 | 1.6 | 0.3 | 0.5 | 0.3 | × | 0 |
| | 8 | 3 | 2 | 0.7 | 1.1 | 0.5 | ○ | 18 |
| | 9 | 2.4 | 0.9 | 0.4 | 0.6 | 0.1 | × | 2 |
| | 10 | 3.2 | 1.2 | 0.6 | 0.7 | 0.9 | ○ | 20 |

Table 6 shows numbers of Examples or comparative examples, the content (reduced mass percent in the total wire mass) of each of Ti, Si, Al, Zr, and Mg in the flux-cored wire 100, a shape of a bead provided by welding, and the number (the number of BH) of blowholes (mentioned as BH) of 3 mm or more in length in the bead provided by welding. In this case, the welding current I was fixed to 380 (A) and the magnetic flux density B was fixed to 68 (mT), thereby the product of the welding current I and the magnetic flux density B was fixed to 25480 (A • mT). The frequency f of the coil current was fixed to 3 Hz.

In each of the Examples 1 to 10, a good bead shape (○) was provided by welding, and the number of blowholes was less than 10.

In the comparative example 1 having a Ti equivalent of 1.4, although the number of blowholes was less than 10, dripping occurred in a bead provided by welding, resulting in a bad bead shape (×). In the comparative example 2 having a Ti equivalent of 3.6, although a good bead shape (○) was provided by welding, the number of blowholes exceeded 10.

In the comparative example 3 having a Si equivalent of 0.5, although the number of blowholes was less than 10, overlap occurred in a bead provided by welding, resulting in a bad bead shape (×). In the comparative example 4 having a Si equivalent of 2.2, although a good bead shape (○) was provided by welding, the number of blowholes exceeded 10.

In the comparative example 5 having an Al equivalent of 0.1, although the number of blowholes was less than 10, overlap occurred in a bead provided by welding, resulting in a bad bead shape (×). In the comparative example 6 having an Al equivalent of 1.1, although a good bead shape (○) was provided by welding, the number of blowholes exceeded 10.

In the comparative example 7 having a Zr equivalent of 0.5, although the number of blowholes was less than 10, dripping occurred in a bead provided by welding, resulting in a bad bead shape (×). In the comparative example 8 having a Zr equivalent of 1.1, although a good bead shape (○) was provided by welding, the number of blowholes exceeded 10.

In the comparative example 9 having an Mg equivalent of 0.1, although the number of blowholes was less than 10, dripping occurred in a bead provided by welding, resulting in a bad bead shape (×). In the comparative example 10 having an Mg equivalent of 0.9, although a good bead shape (○) was provided by welding, the number of blowholes exceeded 10.

As described above, it is preferred to use the flux-cored wire 100 having, relative to the total mass of the wire, a total Ti equivalent of metal Ti, Ti oxide, and Ti compounds: 1.5 to 3.5 mass%, a total Si equivalent of metal Si, Si oxide, and Si compounds: 0.6 to 2.0 mass%, a total Al equivalent of metal Al, Al oxide, and A1 compounds: 0.2 to 1.0 mass%, a total Zr equivalent of metal Zr, Zr oxide, and Zr compounds: 0.6 to 1.0 mass%, and a total Mg equivalent of metal Mg, Mg oxide, and Mg compounds: 0.2 to 0.8 mass%, the remainder consisting of Fe and inevitable impurities.

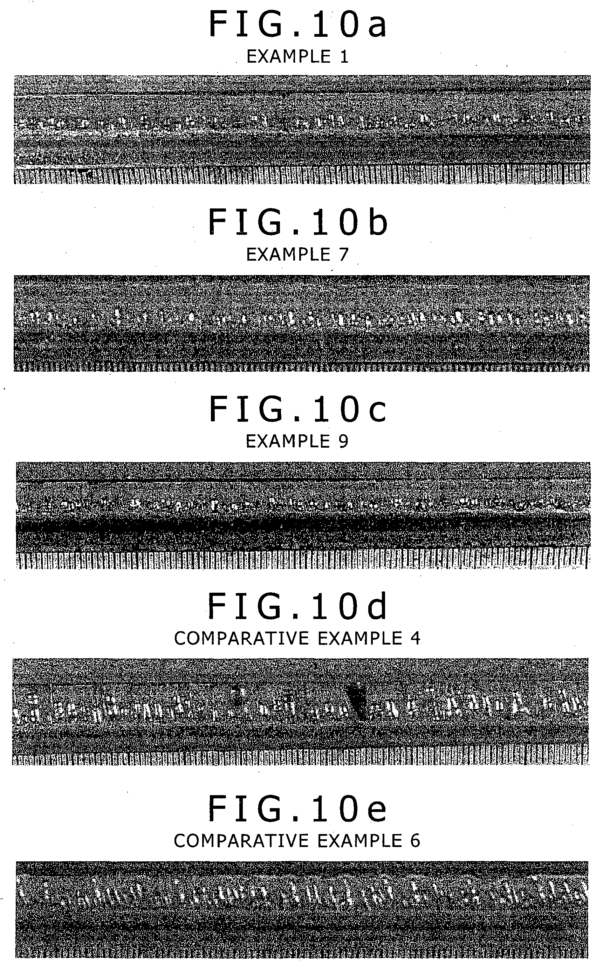

Figs. 10a to 10e are diagrams for explaining fractures of beads provided in Examples and comparative examples. Fig. 10a illustrates a fracture of a bead provided in the Example 1, Fig. 10b illustrates a fracture of a bead provided in the Example 7, Fig. 10c illustrates a fracture of a bead provided in the Example 9, Fig. 10d illustrates a fracture of a bead provided in the comparative example 4, and Fig. 10e illustrates a fracture of a bead provided in the comparative example 6.

As described above, to suppress blowhole expansion or pit formation, it is important to control viscosity of the slug caused by the flux-cored wire 100 to be low, and when each component of the flux-cored wire 100 is controlled to be within the above-described range, pores can be reduced while a good bead shape is maintained.

Although this embodiment has been exemplarily described with a carbon-dioxide-gas shielded arc welding technique employing carbon dioxide gas as the shield gas, available shield gas is not limited to carbon dioxide gas. For example, similar results are also obtained in the case of using a mixed gas including carbon dioxide gas as a main component (50% or more) and an inert gas (for example, argon gas) as an additive.

Although this embodiment has been described with an exemplary case where the work 200 (weldment) is fabricated using the first steel plate 201 composed of a primer-coated steel plate and the second steel plate 202 composed of a primer-coated steel plate, if the second steel plate 202 is a primer-coated steel plate, the first steel plate 201 may not be a primer-coated steel plate.

Furthermore, although this embodiment has been described with an exemplary case where a T joint is formed using the first steel plate 201 and the second steel plate 202, the invention is not limited thereto. For example, the invention is also useful in the case where a lap joint or a corner joint is formed using such steel plates.

List of Reference Signs

1 welding apparatus, 10 welding torch, 11 torch body, 12 nozzle, 13 tip base, 13a gas supply port, 14 contact tip, 15 support, 17 coil, 18 coil holder, 20 welding source, 30 wire feeder, 40 shield gas supply device, 50 magnetic-field application source, 70 control section, 71 setting reception section, 72 welding current setting section, 73 coil current setting section, 74 feed speed setting section, 100 flux-cored wire, 200 work, 201 first steel plate, 202 second steel plate, 301 first weld, 302 second weld, 400 molten pool, I welding current, B magnetic flux density, f frequency

**Claims**

1. A method of fabricating a weldment through welding of corners between a lower plate and a vertical plate, the lower plate being composed of a primer-coated steel plate, the vertical plate being composed of a steel plate and placed vertically on the lower plate,
wherein a molten pool is formed in each of the corners by supplying a welding current from a flux-cored wire to the corner via arc with a shield gas, the flux-cored wire including a steel sheath having a flux-filled inside, the shield gas mainly containing carbon dioxide gas, and
an alternating magnetic field is applied to the molten pool,
the welding current (A) and the magnetic flux density (mT) of the alternating magnetic field having a relationship

$$20000 \leq \text{welding current} \times \text{magnetic flux density} \leq 30000,$$

wherein the alternating magnetic field has a fundamental frequency of 2 to 5 Hz, and
wherein a composition of the flux-cored wire has, relative to the total mass of the wire,
a total Ti equivalent of metal Ti, Ti oxide, and Ti compounds: 1.5 to 3.5 mass%,
a total Si equivalent of metal Si, Si oxide, and Si compounds: 0.6 to 2.0 mass%,
a total Al equivalent of metal Al, Al oxide, and Al compounds: 0.2 to 1.0 mass%,
a total Zr equivalent of metal Zr, Zr oxide, and Zr compounds: 0.6 to 1.0 mass%,
a total Mg equivalent of metal Mg, Mg oxide, and Mg compounds: 0.2 to 0.8 mass%, and
the remainder consisting of Fe and inevitable impurities.

## Patentansprüche

1. Verfahren zum Herstellen einer Schweißverbindung durch Schweißen von Eckpunkten zwischen einer unteren Platte und einer vertikalen Platte, wobei die untere Platte aus einer mit Primer beschichteten Stahlplatte besteht, die vertikale Platte aus einer Stahlplatte besteht und vertikal auf der unteren Platte angeordnet ist,
wobei ein Schmelzbad in jedem der Eckpunkte gebildet wird, indem ein Schweißstrom von einem Fülldraht zu dem Eckpunkt mittels Lichtbogen mit einem Schutzgas zugeführt wird, wobei der Fülldraht eine Stahlhülle mit einem flussmittelgefüllten Inneren einschließt, wobei das Schutzgas hauptsächlich Kohlenstoffdioxidgas enthält, und ein magnetisches Wechselfeld an das Schmelzbad angelegt wird,
wobei der Schweißstrom (A) und die magnetische Flussdichte (mT) des magnetischen Wechselfeldes eine Beziehung aufweisen

$$20000 \leq \text{Schweißstrom} \times \text{magnetische Flussdichte} \leq 30000,$$

wobei das magnetische Wechselfeld eine Grundfrequenz von 2 bis 5 Hz aufweist, und
wobei eine Zusammensetzung des Fülldrahts, bezogen auf die Gesamtmasse des Drahtes,
ein Gesamt-Ti-Äquivalent von metallischem Ti, Ti-Oxid und Ti-Verbindungen: 1,5 bis 3,5 Masse-%,
ein Gesamt-Si-Äquivalent von metallischem Si, Si-Oxid und Si-Verbindungen: 0,6 bis 2,0 Masse-%,
ein Gesamt-Al-Äquivalent von metallischem Al, Al-Oxid und Al-Verbindungen: 0,2 bis 1,0 Masse-%,
ein Gesamt-Zr-Äquivalent von metallischem Zr, Zr-Oxid- und Zr-Verbindungen: 0,6 bis 1,0 Masse-% und
ein Gesamt-Mg-Äquivalent von metallischem Mg, Mg-Oxid und Mg-Verbindungen: 0,2 bis 0,8 Masse-% aufweist, und
wobei der Rest aus Fe und unvermeidbaren Verunreinigungen besteht.

## Revendications

1. Procédé de fabrication d'un ensemble soudé par soudage de coins entre une plaque inférieure et une plaque verticale, la plaque inférieure étant composée d'une plaque d'acier revêtue d'un apprêt, la plaque verticale étant composée d'une plaque d'acier et étant placée verticalement sur la plaque inférieure,
dans lequel un bain de fusion est formé dans chacun des coins en fournissant un courant de soudage à partir d'un fil à flux incorporé au coin par l'intermédiaire d'un arc à l'aide d'un gaz protecteur, le fil à flux incorporé comportant une gaine d'acier ayant un intérieur rempli de flux, le gaz protecteur contenant principalement du gaz dioxyde de carbone, et
un champ magnétique alternatif est appliqué au bain de fusion,
le courant de soudage (A) et la densité de flux magnétique (mT) du champ magnétique alternatif ayant une relation
$20\,000 \leq \text{courant de soudage} \times \text{densité de flux magnétique} \leq 30\,000,$

dans lequel le champ magnétique alternatif a une fréquence fondamentale de 2 à 5 Hz, et
dans lequel une composition du fil à flux incorporé a, par rapport à la masse totale du fil,
un équivalent de Ti total de métal Ti, d'oxyde de Ti, et de composés Ti : 1,5 à 3,5 % en masse,
un équivalent de Si total de métal Si, d'oxyde de Si, et de composés Si : 0,6 à 2,0 % en masse,
un équivalent d'Al total de métal Al, d'oxyde d'Al, et de composés Al : 0,2 à 1,0 % en masse,
un équivalent de Zr total de métal Zr, d'oxyde de Zr, et de composés Zr : 0,6 à 1,0 % en masse,
un équivalent de Mg total de métal Mg, d'oxyde de Mg, et de composés Mg : 0,2 à 0,8 % en masse, et
le reste étant constitué de Fe et d'impuretés inévitables.

# FIG.1

# F I G . 2

# FIG.3

# FIG.4

# F I G . 5

# FIG.6

# FIG.7a

201

PLATE LAP PORTION

202

301

# FIG.7b

# FIG.7c

# FIG.8

# FIG. 9

# FIG.10a
### EXAMPLE 1

# FIG.10b
### EXAMPLE 7

# FIG.10c
### EXAMPLE 9

# FIG.10d
### COMPARATIVE EXAMPLE 4

# FIG.10e
### COMPARATIVE EXAMPLE 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 101143401 A
- JP 2012218065 A
- JP 2006095550 A
- JP 2007098459 A